# EUROPEAN PATENT APPLICATION

(11) **EP 2 570 285 A1**
(43) Date of publication of application: **20.03.2013**
(21) Application number: 11425232.3
(22) Date of filing: 14.09.2011
(51) Int. Cl.: B60K 15/04

(54) **Spout and cap element for tanks**

(71) Applicant: Poma, Armando, 40054 Budrio (BO) (IT)
(72) Inventor: Poma, Armando, 40054 Budrio (BO) (IT)
(74) Representative: Modiano, Micaela Nadia

(57) **Abstract**

A spout and cap element (1) for tanks (1) comprising a substantially tubular body (2) designed to be stably engaged in a corresponding opening in the installation tank.

The substantially tubular body (2) is provided with a substantially longitudinal through hole (3) provided with a movable closing flap (4), associated with respective elastic means.

The substantially tubular body (2) comprises an end plate (5) that is substantially coplanar with the end rim of the tubular body (2), at the part thereof that is exposed to the exterior when the body (2) is installed in the tank. The through hole (3) is also provided in the end plate (5), substantially at the corresponding central axis of symmetry. Engaged along at least one portion of the hole is the movable flap (4), forced into the configuration of blocking the hole (3) by the elastic means.

## Description

The present invention relates to a spout and cap element for tanks.

Access to tanks is generally controlled by means of an element designed to isolate the tank from the outside environment.

In essence the spout and cap element enables the operator to fill the tank by accessing an opening therein with the nozzle for dispensing the liquid to fill it with. At the same time, when the tank does not require refilling, the spout and cap element is arranged in a configuration that prevents access to the inside of the tank, thus guarding against the accidental introduction of dust and/or other substances.

Elements of the known type are arranged so as to encircle the refilling duct of the tank, at its end, forming an outer crown (with a much larger diameter than the diameter of the above-mentioned duct) and an inner hull (with a slightly larger diameter than the diameter of the above-mentioned duct).

Between the crown and the hull, an annular concave chamber is formed. During refilling, outflow of the refilling substance, and its stagnation in the chamber, are possible.

This can lead to problems due to a possible percolation of the substance (often mixed with the dust settled in the annular chamber) in the tank or in the elements located below it.

With particular reference to tanks used for specific substances (for example tanks for containing the urea used in processes of catalyzation of the combustion reaction in some heat engines), the access opening in the tank, through which the refilling with the respective nozzle is to be performed, has specific dimensions.

In particular the urea nozzle (to continue the example) has a smaller diameter than all other nozzles for dispensing fuels.

The opening will have a diameter that is such as to receive only the nozzle designed for it. Nozzles of other substances therefore cannot access the inside of the tank.

However, the erroneous dispensing of an incorrect substance (for example Diesel fuel instead of urea) into the spout and cap element can cause the filling of the concave annular chamber. In fact access to the tank is governed by a valve body that ensures the opening is closed automatically. Only with a nozzle of the right shape and dimensions it is possible to overcome the valve body and access the inside of the tank.

Removing the accumulated substance in the chamber is complex, and moreover the operator could easily get spattered with the substance contained in the chamber during this operation.

If it is decided not to remove the substance present in the chamber, then a percolation thereof may occur, possibly to the interior of the tank (by capillary action through the joints between the element and the duct with which it is associated).

The aim of the present invention is to solve the above-mentioned problems, by providing a spout and cap element for tanks that guards against the stagnation of substances in proximity to the duct for access to the tank.

Within this aim, an object of the invention is to provide a spout and cap element for tanks that greatly reduces the risk of dispensing substances other than the intended substance into the tank.

Another object of the invention is to provide a spout and cap element for tanks that enables simplified mounting and use.

Another object of the present invention is to provide a spout and cap element for tanks which is low-cost, easily and practically implemented and safely applied.

This aim and these and other objects which will become more evident hereinafter are achieved by a spout and cap element for tanks of the type comprising a substantially tubular body that is designed to be stably engaged in a corresponding opening in the installation tank, said substantially tubular body being provided with a substantially longitudinal through hole provided with a movable closing flap, associated with respective elastic means, characterized in that said substantially tubular body comprises an end plate that is substantially coplanar with the end rim of said tubular body, at the part thereof that is exposed to the exterior when the body is installed in said tank, said through hole also being provided in said end plate, substantially at the corresponding central axis of symmetry, said movable flap being engaged along at least one portion of said hole and forced into the configuration of blocking said hole by said elastic means.

Further characteristics and advantages of the invention will become more apparent from the description of a preferred, but not exclusive, embodiment of the spout and cap element for tanks, according to the invention, which is illustrated for the purposes of non-limiting example in the accompanying drawings wherein:

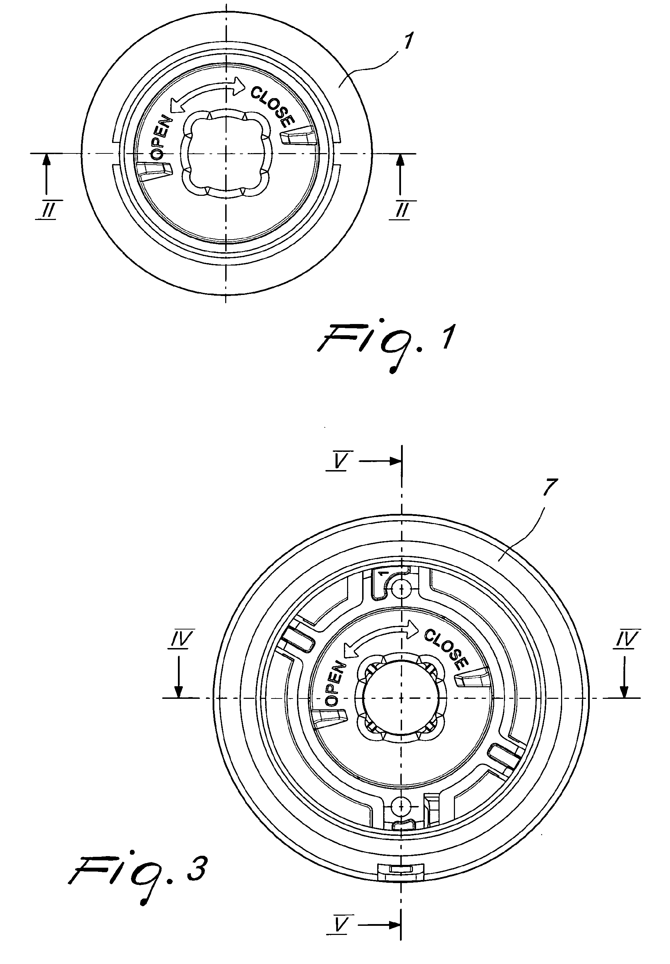

Figure 1 is a view from above of a first embodiment of a spout and cap element for tanks according to the invention;

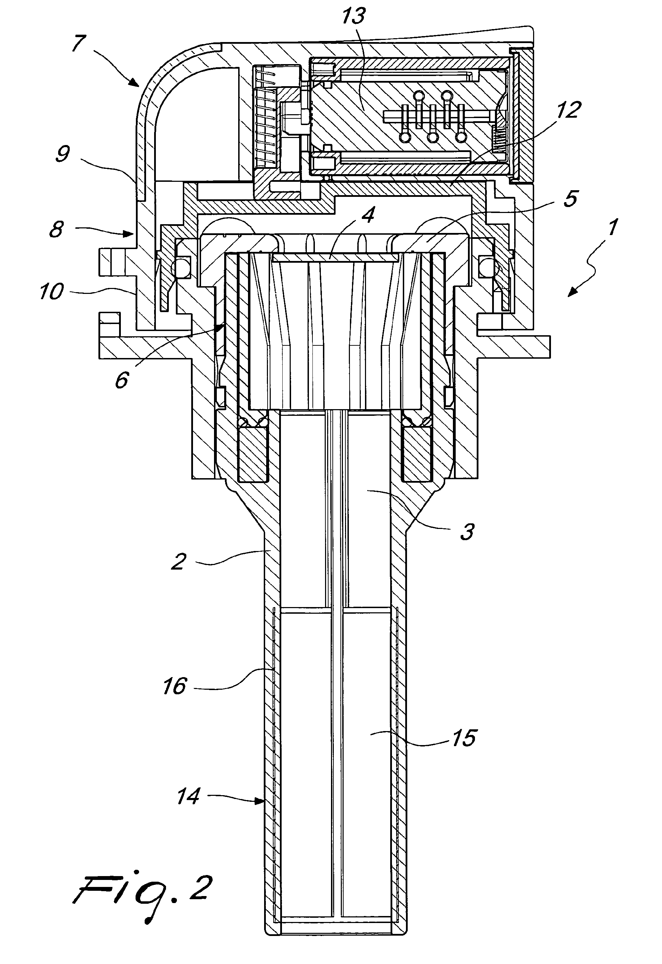

Figure 2 is a sectional view along the line II-II shown in Figure 1 of the first embodiment of the spout and cap element for tanks;
Figure 3 is a view from above of a second embodiment of a spout and cap element for tanks according to the invention;

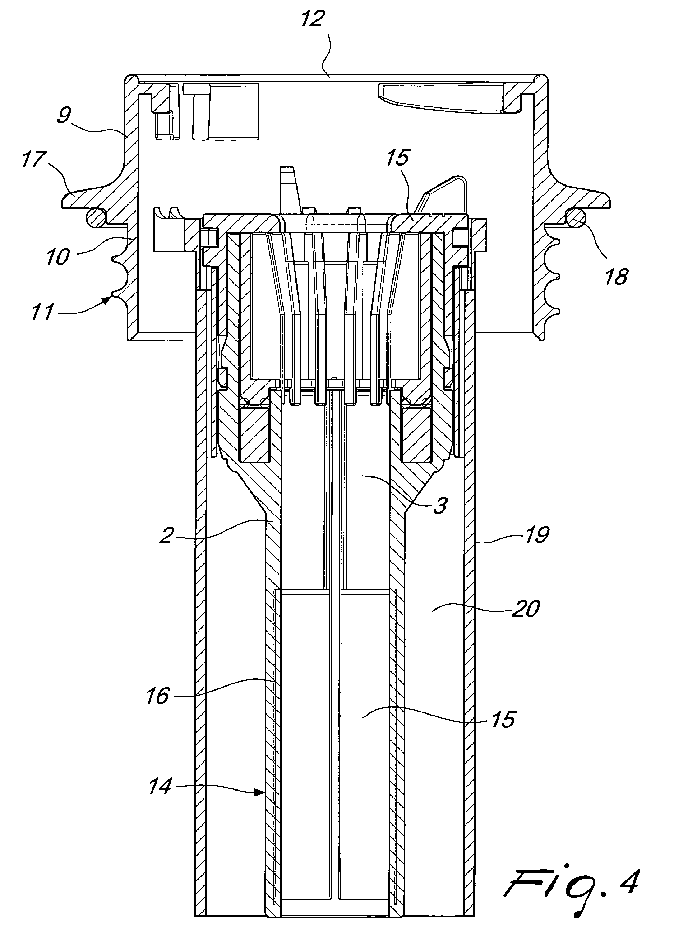

Figure 4 is a sectional view along the line IV-IV shown in Figure 3 of the second embodiment of the spout and cap element for tanks;

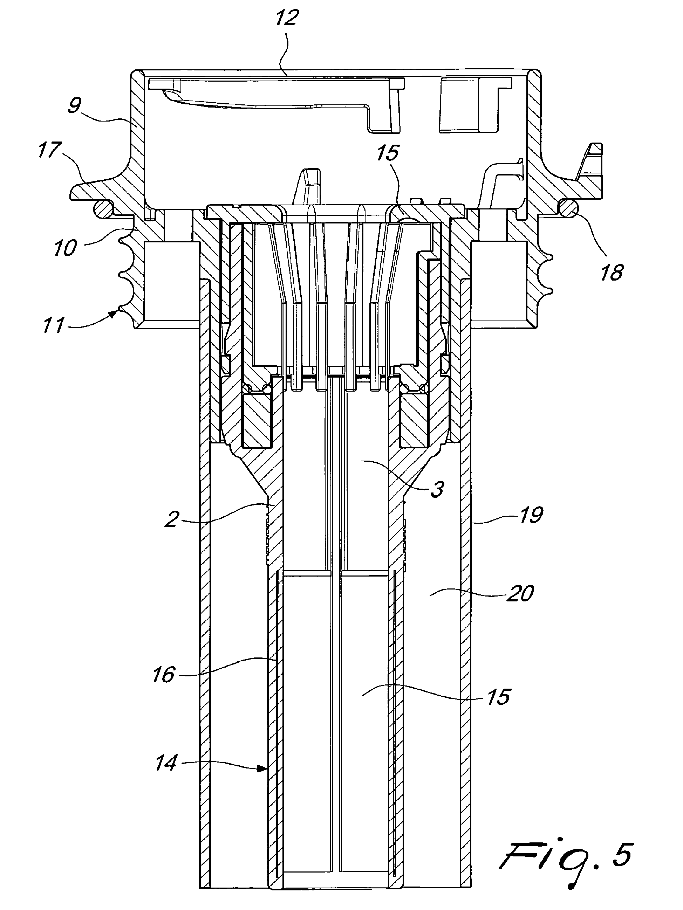

Figure 5 is a sectional view along the line V-V shown in Figure 3 of the second embodiment of the spout and cap element for tanks.

With reference to the figures, the reference numeral 1 generally designates a spout and cap element for tanks. It should be noted that the present invention is particularly suitable for tanks designed to contain urea, used for the abatement of pollutants in the exhaust fumes of internal combustion engines.

The spout and cap element 1 comprises a substantially tubular body 2 designed to be stably engaged in a corresponding opening in the installation tank.

The substantially tubular body 2 is provided with a substantially longitudinal through hole 3 provided with a movable closing flap 4, associated with respective elastic means.

The function of the elastic means is to keep the flap 4 in a specific configuration, in the absence of outside actions geared to contrast its thrust. For example, the flap could be associated with the elastic means for keeping the access to the through hole 3 shut; in the event of an external action on the flap 2 geared to the opening thereof, if this action is greater than that of the elastic means then a movement is caused of the flap 4 with consequent opening of the access to the hole 3.

The substantially tubular body 2 comprises, according to the invention, an end plate 5 that is substantially coplanar with the end rim of the tubular body 2, at the part thereof that is exposed to the exterior when the body is installed in the tank.

The through hole 3 is also provided in the end plate 5, substantially at the corresponding central axis of symmetry.

Engaged along at least one portion of the hole 3 of the end plate 5 is the movable flap (for example hinged, tilting or able to perform a translational movement), forced into the configuration of blocking the hole 3 by the respective elastic means.

Arranged outside the end 6 of the tubular body 2 which is directed outward, again with reference to the installation configuration on the tank, is a closure unit 7 constituted by an outer sleeve 8 of greater diameter than the tubular body 2 and provided with an upper collar 9 and a lower collar 10.

The lower collar 10 comprises elements for coupling to the tubular body 2 of the type of threading, bayonet mounts and the like.

In particular, interposed between these coupling elements and the tubular body 2, there can also be other components which are integral with the tubular body 2 and/or with the corresponding tank.

In essence, when the tubular body 2 is correctly coupled to the tank, it will be possible to couple the lower collar, with its coupling means, to a portion of the tank that is located perimetrically to the tubular body 2 as well, in order to ensure the blocking thereof. The closure unit 7 in fact acts as a protective closure that prevents substances of any kind from being deposited on the surface of the tubular body 2 and/or of the flap 4; similarly it also protects the substances contained in the tank from theft, in that it prevents free access to the through hole 3.

If the coupling between the unit 7 and the corresponding fixed component is provided by a threading 11 then this will be mated with the one present in the walls, which are adjacent to the opening for the tank, in the structure in which the tank is installed.

According to a particular embodiment of undoubted practical and applicative interest the upper collar 9 comprises a closing end plate 12.

The closure unit 7 will in fact be shaped like a cap that can be removably associated with the tubular body 2 for controlling the accessibility of the through hole 3 from outside.

A locking/unlocking apparatus 13 is preferably interposed between the coupling elements of the lower collar 10 of the closure unit 7 and the tubular body 2, and is actuated by a respective key.

Preferably, the locking/unlocking apparatus 13 is a cylinder with a key and is arranged with its axis substantially perpendicular to the axis of symmetry of the tubular body 2. This geometric arrangement of the cylinder enables a minimization of encumbrances and simultaneously an enhanced security in controlling access to the hole 3.

It will be profitably possible to provide a watertight seat for containing the cylinder that constitutes the apparatus 13. This will ensure that the components thereof are not subjected to the actions of corrosion, oxidization and the like caused by the vapors (and by other traces) of the substance contained in the tank.

The tubular body 2 has, at the end 14 arranged inside the tank (when the element 1 is in the installation configuration), a drainage pipe that has, along at least one part of its surfaces, a passage 15 that is flow controlled by a filtering membrane 16, for retaining any suspended particles present in the liquid introduced into the tank through the element 1.

Depending on the liquid that is to be stored in the tank and depending on its use, the membrane 16 can have different shapes so as to vary the quality of the filtration as desired.

According to an embodiment of undoubted practical and applicative interest, the through hole 3 can have a shape and dimensions that are complementary to those of the nozzle designed to supply the liquid to be introduced into the tank.

If the nozzle is of the pistol type for dispensing fuel, the hole 3 will be shaped like the end portion of the nozzle intended to be inserted therein.

This ensures that a substance other than that for which the tank is designed cannot be erroneously introduced. In fact the introduction of different fuels into a tank that is designed, for example, to supply an internal combustion engine can cause damage to the engine (for example a four stroke engine can only be powered with gasoline and the introduction of Diesel fuel would cause damage).

It should conveniently be pointed out that arranged between the upper collar 9 and the lower collar 10 there is a protruding ring 17.

Between the ring 17 and the surface of the tank adjacent to the opening, sealing means 18 are interposed.

It should be emphasized that arranged around the drainage pipe (of the end 14) there is a sleeve 19 that forms an interspace 20 for adjusting the drainage of liquid, in the step of filling the tank with the liquid.

The filling of the interspace 20 will forestall the filling of the tank, thus warning the operator of the condition that has been reached with a small outward reflux of liquid. This ensures that the operator will avoid the condition of excessively filling the tank which would cause a more substantial reflux with great waste of substance.

Advantageously the present invention solves the problems mentioned earlier, by providing a spout and cap element 1 for tanks that guards against the stagnation of substances in proximity to the access duct of the tank. This is because the end plate 5 is substantially coplanar with the terminal edge of the tubular body 2, a geometric arrangement that does not form a seat of stagnation and accumulation of material on the top of the element 1.

Conveniently the present invention provides a spout and cap element 1 for tanks that greatly reduces the risk of dispensing substances other than the intended substance into the tank, thanks to the specific shape of the hole 3 (complementary to that of the end portion of the nozzle for dispensing the substance) and thanks to the presence of the flap 4 which is elastically maintained to keep the hole 3 closed.

Positively the present invention provides a spout and cap element 1 for tanks that enables simplified mounting and use.

In fact the element 1 can be fixed to the opening of the tank following a simple operation of screwing, welding and/or adhesive bonding, while its closure unit 7 can be coupled by means of screwing or a bayonet mount, optionally made more secure by the presence of the apparatus 13 (constituted for example by a cylinder with respective key).

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A spout and cap element (1) for tanks of the type comprising a substantially tubular body (2) that is designed to be stably engaged in a corresponding opening in the installation tank, said substantially tubular body (2) being provided with a substantially longitudinal through hole (3) provided with a movable closing flap (4), associated with respective elastic means, **characterized in that** said substantially tubular body (2) comprises an end plate (5) that is substantially coplanar with the end rim of said tubular body (2), at the part thereof that is exposed to the exterior when the body (2) is installed in said tank, said through hole (3) also being provided in said end plate (5), substantially at the corresponding central axis of symmetry, said movable flap (4) being engaged along at least one portion of said hole and forced into the configuration of blocking said hole (3) by said elastic means.

2. The element according to claim 1, **characterized in that** arranged outside the end of said tubular body (2) which is directed outward, with reference to the installation configuration on the tank, is a closure unit (7) constituted by an outer sleeve (8) of a diameter larger than that of the tubular body (2) and provided with an upper collar (9) and a lower collar (10).

3. The element according to claim 2, **characterized in that** said lower collar (10) comprises elements for coupling to said tubular body (2) of the type of threading, bayonet mounts and the like.

4. The element according to claim 3, **characterized in that** said threading (11) is mated with the one present in the walls, which are adjacent to said opening for said tank, in the structure in which said tank is installed.

5. The element according to claim 2, **characterized in that** said upper collar (9) comprises a closing end plate (12), said closure unit (7) being shaped like a cap that can be removably associated with said tubular body (2) for controlling the accessibility of said through hole (3) from outside.

6. The element according to claim 3, **characterized in that** a locking/unlocking apparatus (13) is interposed between said coupling elements of said lower collar (10) of said closure unit (7) and said tubular body (2), and is actuated by a respective key.

7. The element according to claim 6, **characterized in that** said locking/unlocking apparatus (13) is a cylinder with a key and is arranged with its axis substantially perpendicular to the axis of symmetry of said tubular body (2).

8. The element according to one or more of the preceding claims, **characterized in that** said tubular body (2) is provided, at the end arranged inside said tank in the installation configuration, with a drainage pipe (14) that has, along at least one part of its surfaces, a passage (15) that is flow controlled by a filtering membrane (16), for retaining any suspended particles present in the liquid introduced into the tank through said element (1).

9. The element according to one or more of the preceding claims, **characterized in that** said through hole (3) has a shape and dimensions that are complementary to those of the nozzle designed to supply the liquid to be introduced into the tank.

10. The element according to one or more of the preceding claims, **characterized in that** arranged between said upper collar (9) and said lower collar (10) is a protruding ring (17), sealing means (18) being interposed between said ring (17) and the surface of said tank adjacent to said opening.

11. The element according to one or more of the preceding claims, **characterized in that** arranged around said drainage pipe (14) is a sleeve (19) that forms an interspace (20) for adjusting the drainage of liquid, in the step of filling said tank with said liquid, the filling of said interspace (20) forestalling the filling of the tank, thus warning the operator of the condition that has been reached with a small outward reflux of liquid.
